# EUROPEAN PATENT SPECIFICATION

(11) **EP 3 663 086 B1**
(45) Date of publication and mention of the grant of the patent: **23.06.2021**
(21) Application number: 18210344.0
(22) Date of filing: 05.12.2018
(51) Int. Cl.: B32B 19/04, B32B 3/14, F27D 1/00, F27D 1/04, F27D 1/10

(54) **TEMPERATURE-GRADIENT-OPTIMIZED WEAR PROTECTION**
TEMPERATURGRADIENTENOPTIMIERTER VERSCHLEISSSCHUTZ
PROTECTION CONTRE L'USURE À GRADIENT DE TEMPÉRATURE OPTIMISÉ

(43) Date of publication of application: 10.06.2020
(73) Proprietor: Kalenborn Kalprotect GmbH & Co. KG, 53560 Vettelschoss (DE)
(72) Inventor: Leichnitz, Wolfgang, 83545 Linz/Rhein (DE)
(74) Representative: Kirchner, Veit

(56) References cited:
- DE-A1- 19 719 509
- JP-A- 2013 112 832
- US-A1- 2005 254 543

## Description

The present invention relates to a wear protective lining for technical installations which are operating at higher operating temperature.

In an entire range of technical installations, operation is carried out at elevated temperatures, frequently using hot gases. Operating and gas temperatures of these installations are frequently between 700°C and 1000°C. The walls of the technical installation are usually in contact with the hot material being treated. This results on the one hand in undesirably high intrinsic temperatures of the installation walls and on the other hand in high requirements on the wear protective linings required. These must exhibit their protective properties at such high temperatures and at the same time hold the heat as far as possible in the reaction chamber and not pass it on to the walls of the technical installation. The latter would increase the costs of the manufacturing process. Finally, the wear protective linings must exhibit and retain the best possible sliding property on their surface since otherwise transport of the material being treated through the reaction zone is made difficult. US2005/254543 discloses a steel substrate coated with a lining containing mainly graphite blocks joined by a ceramic layer to the steel substrate.

It is therefore the object of the present invention to provide a wear protective lining for high-temperature installations which permanently has wear protective properties at high operating temperatures and at the same time has the highest possible thermal insulation effect.

This object is solved whereby the high-temperature wear protective lining on metal bases according to the invention comprises: a first outer layer of ceramic material having a polished surface pointing away from the base, wherein the first layer consists of a plurality of interconnected plate-shaped elements, further comprising a second layer of an adhesive agent adjoining the first layer in the direction of the base, further comprising a third layer of a mineral body adjoining the second layer in the direction of the base, which is fabricated to relieve pressure towards the following fourth layer, further comprising a fourth layer of a nanoporous insulation material based on pyrogenic silicic acid, further comprising a fifth inner layer of a mineral body, where the middle layers are each directly adjacent to the respectively adjacent layers and where the fifth layer is in contact with the base. This complex structure of the high-temperature wear protective lining according to the invention achieves, as a result of the polished surface, a very smooth surface directed in the direction of the goods being treated which can be composed of small, easy to handle individual parts as a result of the plate-shaped elements. The elements can also be configured to be curved, that is, adapted to the curvatures of the process engineering installation. They can advantageously be pre-fabricated in the factory and brought to the installation site in the correct installation sequence. The very resistant first layer is directly adjoined by further layers which each have gradually different heat-conducting properties than neighbouring layers, each tuned to one another, and in particular are configured to be seamlessly connected to one another. Mechanically particularly stable layers are also very advantageously provided which enable a pressure relief of the neighbouring inner layers. In the case of two immediately consecutive layers, the one in the direction of the first layer is designated as the outer layer and the other lying in the direction of the base is therefore designated as the inner of the two layers. The invention very advantageously provides a plurality of layers but is thus able to produce a thermal conductivity gradient which largely holds the heat inside the processing engineering installation.

In one embodiment of the invention it is provided that the first layer is a fused cast material comprising aluminium-zirconium and silicon oxide having a Mohs hardness of 9 and a bulk density of 3.5 gram/cm³. Such a ceramic mass is particularly well suited.

It is particularly advantageous if the plate-shaped elements are seamlessly interconnected and/or have pocket-like recesses on their side facing the base and/or comprise tight-fitting elements. This combination of connecting devices enables a particularly firm bond which is held within itself and on the base by means of a tight fit along with the seamless connection.

This holding is advantageously improved still further by fastening additional fastening means to the base, which pass through the inner layers and end in the second layer and which engage in the recesses of the plate-shaped elements. Thereby, in principle, through-openings in the wear protective layers adjusted to each other, and therewith heat bridges, are produced, but the invention accepts this deterioration in the heat insulating properties in order to provide a particularly well-adhering, permanent and resistant high-temperature wear protective lining having a long service life. It is of particularly great advantage if the fastening means do not pass through the first layer so that almost its entire material thickness is available for abrasion. The wear protective lining is therefore particularly stable, individual plates cannot become detached prematurely. Further advantages are specified in the subclaims.

The invention is described as an example in a preferred embodiment with reference to a drawing, where further advantageous details can be deduced from the figure of the drawing. Parts having the same function are provided with the same reference numbers.

The figure of the drawing shows in detail:

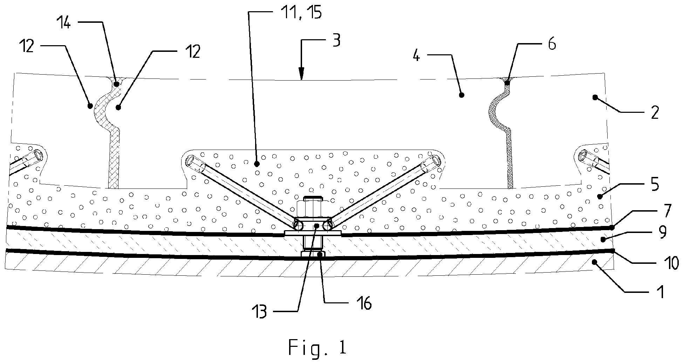

Fig. 1: shows a cross-section through a high-temperature wear protective layer.

Figure 1 shows schematically a cross-section through the structure of the wear protective layer according to the invention for high-temperature applications. The first outer layer 2 is formed by plate-shaped elements 4 which have a polished surface 3. This is oriented towards the material to be treated in the technical installation and therefore away from the base 1. Since this layer appears on the outside, it is designated as outer layer. The polished layer has a roughness of less than or equal to 100 µm which is achieved by polishing with corundum particles. The plate-shaped elements 4 of the first layer 2 of this embodiment have a radius, that is they are adapted to a curved base 1. The plate-shaped elements 4 consist of a mixture of aluminium, zirconium and silicon dioxide. The material has a Mohs hardness of 9 and a bulk density of 3.5 g/cm3. More precisely this ceramic material comprises between 40 wt.% and 60 wt.% corundum, between 25 wt.% and 40 wt.% zirconium oxide and between 10 wt.% and 20 wt.% silicon dioxide. Its thermal conductivity is 1.4 to 1.7 W/mK. The plate-shaped elements 4 of this layer 2 have circumferential tongue/groove combinations as form locking elements 12, whereby these are oriented in the direction of neighbouring elements, that is into the wear protective lining, parallel to the layering. The plate-shaped elements 4 are connected to one another by means of a fastening means 6, i.e. an acid- and temperature- resistant two-component laying material based on water glass. Also shown is an expansion joint 14 filled with a compressible silicate felt or an aluminium silicate wool.

This wool has a thermal conductivity of 0.11 W/mK to 0.21 W/mK (600°C to 1000°C) and therefore forms no heat bridge in the interior of the wear protective lining. These expansion joints 14 are provided according to the invention every three, four, five or six joints. Directed inwards in the direction of the base 1, each plate-shaped element 4 has a recess 15 as a form locking element. The elements 4 are seamlessly and directly connected to the second layer 5, and adhesive agent 6. A material having the chemical composition of 55 wt.% Al₂O₃ and 41 wt.% SiO₂ together with water is used as adhesive agent 6, i.e. a hydraulically bound chamotte. The second layer 5 has a minimal thickness of 45 mm, preferably a thickness between 50 mm and 80 mm and it has a density of 2 to 3 g/cm³. It preferably consists of a silicon-aluminium oxide insulation material having a thermal conductivity between 1.4 and 1.8 W/mK, in particular having a thermal conductivity of 1.6 W/mK at 600°C. The curing time for this material is about 4 hours so that a good processability is obtained at the installation site. This layer is adjoined seamlessly by the third layer 7 which is or comprises a protective layer. As a result, the resulting mechanical pressure and the resulting tensile forces are very advantageously efficiently passed into the layers located further inwards. The directly adjoining fourth layer 9 consists of an aluminosilicate and has thermal conductivities between 0.01 and 0.1 W/mK. This is again followed by the fifth layer 10 - likewise a protective layer - which is adjoined by the base 1.

In this embodiment the fastening means 13 are connected non-positively to the base 1, which has welded-on threaded bushings 16 for this purpose. The fastening means 13 pass through the inner layers 10, 9, 7 and end in the second layer 5, in the region of the recess 15. They are configured here as simple wire hooks where the wire is fastened in a clamping manner between two washers by means of a screw. This holding advantageously allows overhead mounting or a secure curing of an overhead-mounted lining.

The difficulty when constructing this insulation layer according to the invention is to ensure a suitable temperature gradient and to find a permanent and firm transition to the base material, where the inner cohesion of the many-layered wear protective lining must absolutely be preserved even under rough operating conditions. This is achieved according to the invention by a precise and fine tuning of the materials and their thermal conductivities by using materials having increasingly lower thermal conductivity in the direction of the base 1 so that the thermal energy substantially remains inside the process engineering installation. Even if this thereby results in a highly complex structure of the wear protective layer, this is justified by the stability achieved.

### REFERENCE LIST

- 1: Base
- 2: First layer
- 3: Polished surface
- 4: Plate-shaped element
- 5: Second layer
- 6: Adhesive agent
- 7: Third layer
- 9: Fourth layer
- 10: Fifth layer
- 11: Recess
- 12: form locking element
- 13: fastening means
- 14: expansion joint
- 15: Recess
- 16: Threaded bushings

## Claims

1. High-temperature wear protective lining for use on metal bases (1) comprising a first outer layer (2) of ceramic material having a polished surface (3) pointing away from the base, wherein the first layer (2) consists of a plurality of by means of an adhesive agent (6) interconnected plate-shaped elements (4), further comprising a second layer (5) adjoining the first layer (2) in the direction of the base, further comprising a third layer (7) of a mineral body adjoining the second layer (5) in the direction of the base, which is fabricated to relieve pressure of the following fourth layer (9), further comprising a fourth layer (9) of a nanoporous insulation material based on pyrogenic silica, further comprising a fifth inner layer (10) of a mineral body, where the middle layers (5, 7, 9) are each directly adjacent to the respectively adjacent layers and where the fifth layer (10) is in contact with the base.

2. High-temperature wear protective lining according to claim 1, wherein the first layer (2) is a fused cast material comprising aluminium-zirconium and silicon oxide having a Mohs hardness greater than or equal to 8.5 and a bulk density of 3,0 to 4,0 gram/cm³.

3. High-temperature wear protective lining according to claim 1 or 2, wherein the plate-shaped elements (4) are seamlessly interconnected and/or have pocket-like recesses (11) on their side facing the base (1) and/or comprise form locking elements (12).

4. High-temperature wear protective lining according to any one of the preceding claims, wherein fastening means (13) are additionally fastened to the base (1), passing through the inner layers (7, 9, 10) and ending in the second layer (5) and engaging in the recesses (11) of the plate-shaped elements (4).

5. High-temperature wear protective lining according to any one of the preceding claims, wherein the materials of the first, second and forth layer (2, 5, 9) are thermal insulators.

## Patentansprüche

1. Hochtemperatur-Verschleißschutzbelag zur Verwendung auf Metalluntergründen (1), aufweisend eine erste Außenschicht (2) aus einem Keramikmaterial mit einer polierten Oberfläche (3), die von dem Untergrund weg weist, wobei die erste Schicht (2) aus einer Vielzahl von vermittels eines Haftvermittlers (6) untereinander verbundenen, plattenförmigen Elementen (4) besteht, ferner aufweisend eine zweite Schicht (5), die an die erste Schicht (2) in der Richtung des Untergrunds anschließt, ferner aufweisend eine dritte Schicht (7) aus einem Mineralkörper, der sich an die zweite Schicht (5) in der Richtung des Untergrunds anschließt, der gefertigt wird, um Druck der nachfolgenden vierten Schicht (9) zu entlasten, ferner aufweisend eine vierte Schicht (9) aus einem nanoporösen Isolierungsmaterial auf Basis von pyrogenem Siliciumdioxid, ferner aufweisend eine fünfte Innenschicht (10) aus einem Mineralkörper, wobei die mittleren Schichten (5, 7, 9) jeweils an die jeweiligen angrenzenden Schichten unmittelbar angrenzen, und wobei die fünfte Schicht (10) mit dem Untergrund in Kontakt ist.

2. Hochtemperatur-Verschleißschutzbelag nach Anspruch 1, wobei die erste Schicht (2) ein aufgeschmolzenes Gussmaterial ist, welches Aluminium-Zirkonium und Siliziumoxid mit einer Mohshärte von größer gleich 8,5 und einer Bulkdichte von 3,0 bis 4,0 Gramm/cm³ aufweist.

3. Hochtemperatur-Verschleißschutzbelag nach Anspruch 1 oder 2, wobei die plattenförmigen Elemente (4) nahtlos untereinander verbunden sind und/oder taschenartige Ausnehmungen (11) auf ihrer dem Untergrund (1) zugewandten Seite aufweisen und/oder formschlüssige Elemente (12) aufweisen.

4. Hochtemperatur-Verschleißschutzbelag nach einem der vorstehenden Ansprüche, wobei die Befestigungsmittel (13) zusätzlich an dem Untergrund (1) befestigt sind, durch die inneren Schichten (7, 9, 10) verlaufen und in der zweiten Schicht (5) enden und in die Ausnehmungen (11) der plattenförmigen Elemente (4) eingreifen.

5. Hochtemperatur-Verschleißschutzbelag nach einem der vorstehenden Ansprüche, wobei die Materialien der ersten, zweiten und vierten Schicht (2, 5, 9) Wärmeisolatoren sind.

## Revendications

1. Revêtement de protection contre l'usure à haute température destiné à être utilisé sur des bases métalliques (1) comprenant une première couche externe (2) de matériau céramique ayant une surface polie (3) pointant depuis la base, dans lequel la première couche (2) consiste en une pluralité d'éléments en forme de plaque raccordés entre eux (4) au moyen d'un agent adhésif (6), comprenant en outre une deuxième couche (5) adjacente à la première couche (2) dans la direction de la base, comprenant en outre une troisième couche (7) d'un corps minéral adjacente à la deuxième couche (5) dans la direction de la base, qui est fabriquée pour atténuer la pression de la quatrième couche suivante (9), comprenant en outre une quatrième couche (9) d'un matériau d'isolation nanoporeux basé sur une silice pyrogénée, comprenant en outre une cinquième couche interne (10) d'un corps minéral, où les couches intermédiaires (5, 7, 9) sont chacune directement adjacentes aux couches respectivement adjacentes et où la cinquième couche (10) est en contact avec la base.

2. Revêtement de protection contre l'usure à haute température selon la revendication 1, dans lequel la première couche (2) est un matériau coulé fondu comprenant de l'aluminium-zirconium et de l'oxyde de silicium présentant une dureté Mohs supérieure ou égale à 8,5 et une masse volumique de 3,0 à 4,0 grammes/cm³.

3. Revêtement de protection contre l'usure à haute température selon la revendication 1 ou 2, dans lequel les éléments en forme de plaque (4) sont raccordés entre eux sans interruption et/ou présentent des évidements en forme de poches (11) sur leur côté faisant face à la base (1) et/ou comprennent des éléments de verrouillage de forme (12).

4. Revêtement de protection contre l'usure à haute température selon l'une quelconque des revendications précédentes, dans lequel des moyens de fixation (13) sont fixés de manière supplémentaire à la base (1), traversant les couches internes (7, 9, 10) et se terminant dans la deuxième couche (5) et entrant en prise dans les évidements (11) des éléments en forme de plaque (4).

5. Revêtement de protection contre l'usure à haute température selon l'une quelconque des revendications précédentes, dans lequel les matériaux des première, deuxième et quatrième couches (2, 5, 9) sont des isolants thermiques.
